Europäisches Patentamt

European Patent Office

Office européen des brevets

(19)

(11) **EP 0 523 031 B1**

(12) **FASCICULE DE BREVET EUROPEEN**

(45) Date de publication et mention
de la délivrance du brevet:
**24.04.1996 Bulletin 1996/17**

(51) Int Cl.6: **G01L 5/16**, G01L 5/22,
G01L 1/25

(21) Numéro de dépôt: **92870091.3**

(22) Date de dépôt: **18.06.1992**

(54) **Capteur à plusieurs composantes de force et utilisation de celui-ci sur un robot**

Mehrkomponenten-Kraftaufnehmer und seine Anwendung bei einem Roboter

Multiple-component force sensor and its application on a robot

(84) Etats contractants désignés:
**AT BE CH DE FR GB IT LI LU NL SE**

(30) Priorité: **18.06.1991 BE 9100588**

(43) Date de publication de la demande:
**13.01.1993 Bulletin 1993/02**

(73) Titulaire: **UNIVERSITE LIBRE DE BRUXELLES**
**B-1050 Bruxelles (BE)**

(72) Inventeur: **Rossignol, Eric**
**B-1050 Bruxelles (BE)**

(74) Mandataire: **Van Malderen, Michel**
**Office van Malderen**
**Place Reine Fabiola 6/1**
**B-1080 Bruxelles (BE)**

(56) Documents cités:
**EP-A- 0 210 717**      **US-A- 3 921 445**

## Description

### Objet de l'invention

La présente invention concerne un capteur de force notamment destiné à être utilisé sur un robot.

La présente invention concerne également l'utilisation particulière d'un tel capteur sur un robot.

### Art antérieur

On a toujours eu tendance à développer le sens tactile des robots en vue de les destiner plus particulièrement à des travaux d'assemblage qui exigent une grande souplesse et habilité.

Actuellement il existe essentiellement deux grandes catégories de dispositifs qui mesurent les forces d'interaction entre le robot et le monde extérieur permettant aux robots d'avoir une certaine perception au niveau de l'environnement.

D'une part, on connaît des dispositifs qui se situent au niveau du poignet reliant la pince de préhension au membre du robot. Ces dispositifs peuvent travailler selon différents principes physiques.

Un type particulier de capteurs est constitué par des dispositifs dits optiques qui permettent de mesurer des déformations au moyen de détecteurs de lumière à deux dimensions.

Les jauges de contrainte sont également des dispositifs qui permettent d'obtenir une information concernant les forces exercées sur le doigt du robot.

Cependant, tous les capteurs décrits ci-dessus sont disposés au niveau du poignet du fait de leur taille relativement importante, ce qui induit toujours une perte d'information par rapport à l'endroit où se produit le contact.

Une autre grande catégorie de capteurs est constituée par les peaux dites artificielles qui fonctionnent selon des principes fort différents, notamment les peaux piézoélectriques, résistives, magnéto-résistives, magnétostrictives, électro-optiques,...

Ces capteurs sont situés en général sur la pince ou sur le doigt de préhension du robot et se présentent sous la forme d'une matrice donnant une information de type ON/OFF. Les peaux artificielles sont principalement destinées à la reconnaissance de forme et ne permettent pas d'obtenir une mesure quantitative précise des forces auxquelles elles sont soumises.

En outre, certains types de peaux artificielles par exemple les peaux magnéto-résistives subissent l'influence du champ magnétique extérieur.

En outre ce type de capteurs appelés peaux artificielles est particulièrement délicat et ne présente pas une robustesse suffisante leur permettant de résister aux différents chocs se produisant lors du contact direct avec une pièce prise par les doigts du robot.

La demande de brevet EP-0 210 717 décrit un capteur de force à six composantes (Fx, Fy, Fz, Mx, My, Mz) utilisant un matériau déformable de type élastomère et destiné à être intégré à la pince d'un robot.

Ce capteur de force utilise la mesure du temps de propagation d'une onde ultrasonique entre un émetteur piézoélectrique, une surface réfléchissante, et un récepteur piézo-électrique. Tout autre signal, notamment un signal optique, capable d'être transmis, réfléchi et détecté peut également être utilisé.

Cependant, dans l'espace réduit d'un tel capteur, il est difficile d'introduire les appareils de mesure du temps de propagation d'un signal optique.

Le brevet US-3 921 445 décrit un capteur de force à six composantes, qui en raison de ses grandes dimensions est destiné à être utilisé entre le bras et la pince (ou l'effecteur) d'un robot.

Ce capteur de force utilise une mesure de l'intensité lumineuse modulée par l'obturation de l'espace de propagation par un cylindre ou une fenêtre placée entre la source lumineuse et le déflecteur, ceux-ci restant fixes l'un par rapport à l'autre. On mesure ainsi le déplacement de ce cylindre ou de cette fenêtre.

Cependant, la qualité de ce type de mesure de variation d'intensité lumineuse dépend de l'uniformité de la tache de lumière fournie par l'émetteur et de la faible variation de sensibilité du récepteur.

Or, dans ce type de capteur de force, la qualité de l'uniformité d'émission du signal lumineux est en général médiocre et la variation de la sensibilité du dispositif de réception de ce signal lumineux est trop élevée pour pouvoir obtenir des mesures fiables et reproductibles, quelles que soient les conditions extérieures dans lesquelles le capteur de force est utilisé.

### Buts de l'invention

La présente invention vise à proposer un capteur de forces qui permet une mesure des six composantes du tenseur des contraintes à la surface du capteur, c'est-à-dire à l'endroit où le contact se produit.

La présente invention vise par conséquent à fournir un capteur qui effectue une mesure quantitative des forces d'interaction entre le capteur et l'environnement extérieur.

Un autre but de la présente invention est de fournir un capteur de force qui présente une taille réduite.

Le capteur selon la présente invention devra également présenter des qualités de robustesse suffisantes de manière à ce qu'il puisse supporter sans dommage des chocs éventuels exercés sur le doigt ainsi que les surcharges auxquelles il pourrait être soumis.

D'autre part, il convient que le capteur soit insensible ou très peu influencé par les conditions extérieures dans lesquelles il sera utilisé, en particulier au champ électro-magnétique intense ou à la radioactivité, à la variation de température ou de lumière, à la poussière et à l'humidité,...

Un but complémentaire de la présente invention consiste à fournir un capteur de force qui soit indépendant de la variation de la qualité de l'uniformité d'émission de la lumière et de la variation de la sensibilité du dispositif de réception de ce signal lumineux.

## Principaux éléments caractéristiques de l'invention

La présente invention se rapporte à un capteur de force essentiellement constitué d'un coussinet en caoutchouc creux dans lequel est disposé au moins un dispositif de détection à phototransistors.

Le capteur de force est en réalité un capteur de déplacement qui détecte le déplacement d'une surface lorsque celle-ci est soumise à une force.

Le dispositif à phototransistor comporte dans un boîtier de très petite taille une LED (Light Emission Device), infrarouge, et un phototransistor qui détecte la présence d'une surface devant lui, par la mesure de l'intensité du rayonnement réfléchi sur la surface.

De préférence, le capteur de force est destiné à mesurer les six composantes du tenseur des contraintes, à savoir un effort normal, deux efforts tranchants et trois couples, ceci à l'aide de huit dispositifs à phototransistor.

Ce capteur de force est disposé directement sur le doigt du robot ce qui permet d'obtenir une information directe et précise du tenseur des contraintes exercées sur le doigt du robot.

## Brève description des figures

La figure 1 représente une vue schématique des différentes parties mécaniques constituant le doigt du robot muni d'un capteur de force selon la présente invention.

La figure 2 représente une vue par le côté du doigt d'un robot muni d'un capteur selon la présente invention.

La figure 3 représente une vue par le dessous du capteur selon la présente invention dans une forme d'exécution préférée.

La figure 4 représente de manière schématique la configuration du système de détection complet comprenant un capteur de force selon la présente invention disposé sur le doigt du robot.

## Description d'un mode d'exécution préféré de la présente invention

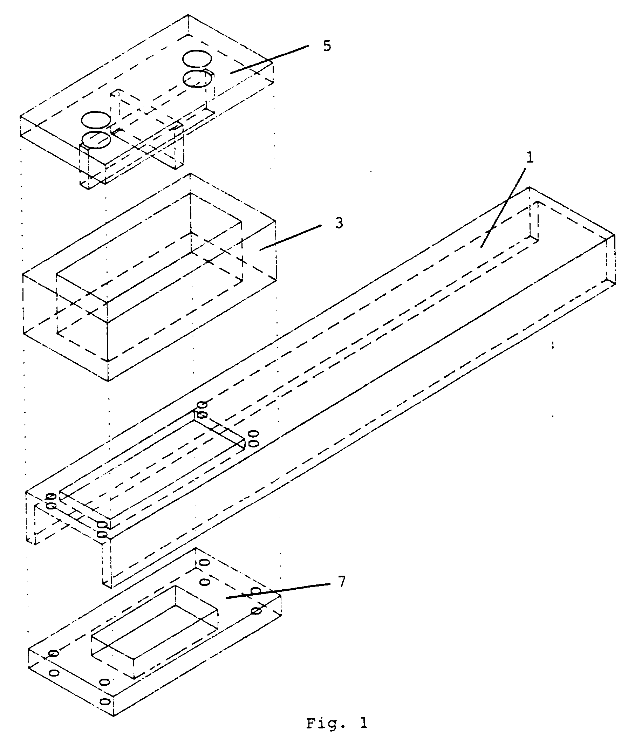

Ainsi que représenté à la figure 1, le doigt 1 du robot se présente sous la forme d'une poutrelle d'aluminium en U sous laquelle est disposé un coussinet 3 en caoutchouc creux. Huit dispositifs de détection à phototransistor $C_0$ à $C_7$ sont placés à l'intérieur du coussinet 3 en caoutchouc et sont fixés sur une plaquette 5 de circuit imprimé en époxy. Une seconde plaquette 7 d'époxy sépare les pistes de cuivre du couvercle 9 en aluminium refermant l'arrière du doigt.

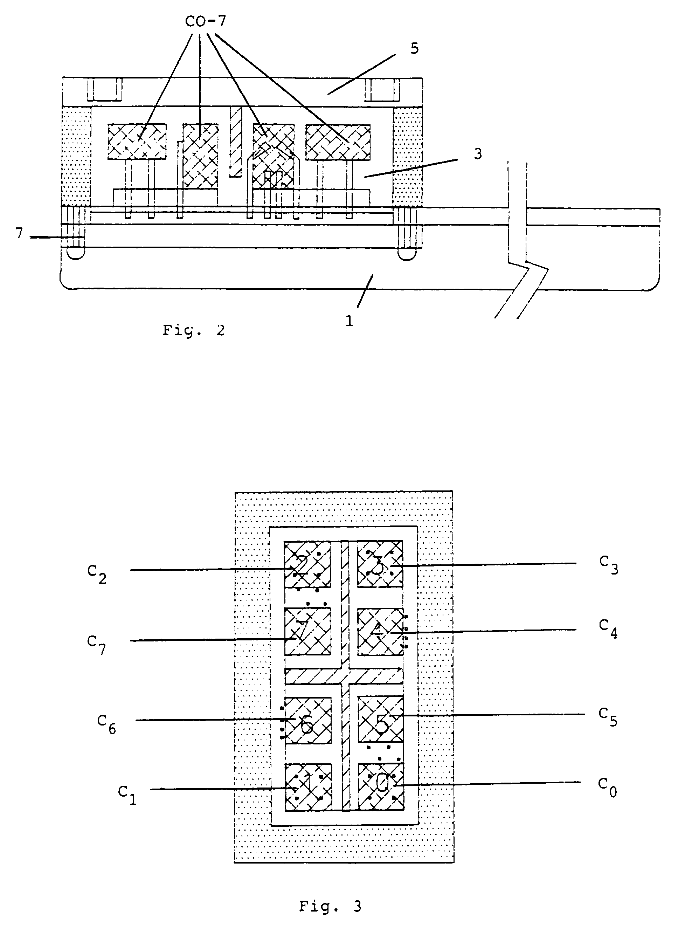

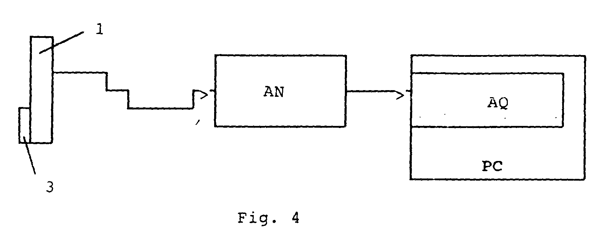

Selon une forme d'exécution particulière représentée aux figures 2 et 3, les huit dispositifs de détection $C_0$ à $C_7$ vont permettre de mesurer les six composantes du tenseur de la manière suivante:

- l'effort normal:

$$FX = C_0 + C_1 + C_2 + C_3$$

- l'effort tranchant d'axe transversal au doigt:

$$FY = C_6 - C_4$$

- l'effort tranchant d'axe parallèle au doigt:

$$FZ = C_7 - C_5$$

- le couple d'axe normal au doigt:

$$MX = C_4 + C_5 + C_6 + C_7$$

- le couple d'axe transversal au doigt:

$$MY = (C_0 + C_1) - (C_2 + C_3)$$

- le couple d'axe parallèle au doigt:

$$MZ = (C_1 + C_2) - (C_0 + C_3)$$

ou de manière matricielle:

$$
\begin{bmatrix} FX \\ FY \\ FZ \\ MX \\ MY \\ MZ \end{bmatrix}
=
\begin{bmatrix}
1 & 1 & 1 & 1 & 0 & 0 & 0 & 0 \\
0 & 0 & 0 & 0 & -1 & 0 & 1 & 0 \\
0 & 0 & 0 & 0 & 0 & -1 & 0 & 1 \\
0 & 0 & 0 & 0 & 1 & 1 & 1 & 1 \\
1 & 1 & -1 & -1 & 0 & 0 & 0 & 0 \\
-1 & 1 & 1 & -1 & 0 & 0 & 0 & 0
\end{bmatrix}
*
\begin{bmatrix} C_0 \\ C_1 \\ C_2 \\ C_3 \\ C_4 \\ C_5 \\ C_6 \\ C_7 \end{bmatrix}
$$

soit F = A.C

Une phase d'étalonnage est nécessaire pour déterminer les éléments de la matrice A. A cet effet, il suffit de réaliser des états de contraintes connus et de mesurer les signaux des dispositifs $C_0$ à $C_7$.

Selon la forme d'exécution préféré représentée aux figures 1 à 3, on citer à titre d'exemple les dimensions suivantes:

| | |
|---|---|
| hauteur totale du capteur: | 25 mm |
| largeur totale du capteur: | 25 mm |
| longueur totale du capteur: | 35 mm. |

Les boîtiers des phototransistors présentent des dimensions inférieures au centimètre. Ces dimensions très faibles permettent de disposer aisément le capteur selon la présente invention sur le doigt d'un robot.

A la figure 4, le doigt du robot est relié à une carte de traitement analogique AN par câble blindé. Cette liaison peut être très longue puisque le robot et la carte analogique ne sont pas nécessairement situés dans les mêmes locaux. Les signaux circulant dans le câble sont modulés en amplitude à une fréquence de 10 kHz sur une impédance très faible. Ces précautions permettent une grande longueur de câble dans un milieu très perturbé.

La carte analogique AN est reliée à une carte d'acquisition AQ placée dans un ordinateur PC.

Le câble reliant la carte analogique AN à la carte d'acquisition AQ devra être aussi court que possible puisqu'il transporte des signaux continus exigeant un rapport signal/bruit élevé.

La carte analogique a pour but la démodulation et la mise en forme des signaux ainsi que de supprimer l'effet des perturbations extérieures et d'améliorer au maximum les caractéristiques des différents dispositifs de détections.

En effet, ceux-ci sont normalement congrus pour un fonctionnement en tout ou rien, mais leur courbe de réponse présente une partie à peu près linéaire pour des distances phototransistor-surface variant entre 1 et 2 mm.

Ceci est mis à profit pour obtenir une mesure quantitative du tenseur des contraintes.

En outre, le caoutchouc devra présenter une épaisseur suffisante de manière à ce que l'on travaille également dans la zone de linéarité. En particulier, on choisit une épaisseur d'environ 1 cm de manière à ne pas dépasser 10% de déformation.

Le caoutchouc permet également, par son comportement globalement non linéaire, de pouvoir encaisser les chocs ou les surcharges éventuels sans détériorer les dispositifs à phototransistor placés à l'intérieur du coussinet.

Le capteur de force selon la présente invention permet par conséquent d'obtenir une mesure suffisamment précise du tenseur des contraintes exercées sur le doigt d'un robot permettent à ce dernier d'effectuer des travaux d'assemblage de haute précision.

En particulier, on a pu obtenir des sensibilités de l'ordre de:

FX:0,5 N
FY:0,1 N
FZ:0,1 N
MX:0,001 Nm
MY:0,001 Nm
MZ:0,001 Nm

L'originalité du capteur selon la présente invention est donc de réaliser une mesure précise et fiable au niveau même du contact avec l'objet manipulé, ce qui rapproche le système de la perception humaine et permet également de résoudre le problème de préhension en particulier limitation du serrage de la pince sur l'objet, détection du glissement,...

Le capteur est avantageusement réalisé de manière compacte, il est léger et présente de faibles dimensions. En outre, son prix est dérisoire et ses performances permettent de l'utiliser sur des robots effectuant des tâches d'assemblage de haute précision, y compris dans des milieux perturbés.

## Revendications

1. Capteur de force, notamment destiné à être utilisé sur un robot, constitué essentiellement d'un coussinet creux (3) en élastomère ou similaire dans lequel est disposé au moins un dispositif de détection optique de déplacement caractérisé en ce que le dispositif de détection optique comprend une LED infrarouge et un phototransistor qui détecte le déplacement d'une surface placée devant lui par la mesure de l'intensité du rayonnement réfléchi sur la surface.

2. Capteur de force selon la revendication 1 caractérisé en ce que le dispositif de détection se présente sous la forme d'un boîtier dont les dimensions sont inférieures au centimètre.

3. Capteur de force selon la revendication 1 ou 2 caractérisé en ce qu'il comprend huit dispositifs de détection ($C_0$ à $C_7$) à phototransistor qui permettent de mesurer les six composantes du tenseur des contraintes exercées sur le capteur.

4. Capteur de force selon l'une quelconque des revendications précédentes caractérisé en ce que les dispositifs de détection présentent une partie quasi linéaire dans courbe de réponse pour des distances phototransistor-surface variant entre 1 et 2 mm.

5. Capteur de force selon l'une quelconque des revendications précédentes caractérisé en ce que le caoutchouc présente une épaisseur suffisante de manière que l'on travaille dans la zone de linéarité.

6. Utilisation d'un capteur de force selon l'une quelconque des revendications précédentes sur le doigt d'un robot.

## Patentansprüche

1. Kraft-Meßfühler, der insbesondere dazu bestimmt ist, bei einem Roboter verwendet zu werden, und der im wesentlichen aus einem hohlen Kissen (3) aus Elastomer oder dergleichen besteht, in dem mindestens eine optische Erfassungsvorrichtung für Verschiebungen angeordnet ist, dadurch gekennzeichnet, daß die optische Erfassungsvorrichtung eine infrarote Leuchtdiode und einen Phototransistor aufweist, wobei der Phototransistor die Verschiebung einer vor ihm angeordneten Oberfläche durch Messung der Intensität der von der Oberfläche reflektierten Strahlung erfaßt.

2. Kraft-Meßfühler gemäß Anspruch 1, dadurch gekennzeichnet, daß die Erfassungsvorrichtung die Form eines Gehäuses hat, dessen Abmessungen kleiner als 1 Zentimeter sind.

3. Kraft-Meßfühler gemäß Anspruch 1 oder 2, dadurch gekennzeichnet, daß er acht Phototransistor-Erfassungsvorrichtungen ($C_0$ bis $C_7$) aufweist, die ermöglichen, die sechs Komponenten des Tensors der auf den Meßfühler ausgeübten Spannungen zu messen.

4. Kraft-Meßfühler gemäß irgendeinem der vorhergehenden Ansprüche, dadurch gekennzeichnet, daß die Erfassungsvorrichtungen für Phototransistor-Oberflächen-Abstände zwischen 1 und 2 mm einen nahezu linearen Teil in der Kennlinie aufweisen.

5. Kraft-Meßfühler gemäß irgendeinem der vorhergehenden Ansprüche, dadurch gekennzeichnet, daß der Gummi eine genügende Dicke aufweist, um in der Linearitätszone arbeiten zu können.

6. Verwendung eines Kraft-Meßfühlers gemäß irgendeinem der vorhergehenden Ansprüche auf dem Finger eines Roboters.

## Claims

1. Force meter or sensor, notably convenient for use on a robot, consisting essentially in a hollow pad (3) in an elastomer or similar, wherein at least an optical movement detection device is arranged, characterized in that the optical detection device comprises an infrared LED and a phototransistor which detects the movement of a surface located in front of him through the measurement of the intensity of the radiation reflected back by the surface.

2. Force meter according to claim 1, characterized in that the detection device is formed with a housing the dimensions of which are lower than one centimeter.

3. Force meter according to claim 1 or 2, characterized in that it comprises eigth phototransistor detection devices ($C_0$ to $C_7$) which allow to measure the six components of the stress tensor applied on the force meter.

4. Force meter according to any of preceding claims, characterized in that the detection devices have a quasi linear part in their response curves for phototransistor-surface distances varying between 1 and 2 mm.

5. Force meter according to any of preceding claims, characterized in that the rubber has such a sufficient thickness so as to work in the linearity zone.

6. Use of a force meter according to any of preceding claims on a robot finger.

Fig. 1

CO-7

5

3

7

Fig. 2

1

$C_2$

$C_3$

$C_7$

$C_4$

$C_6$

$C_5$

$C_1$

$C_0$

Fig. 3

Fig. 4